(19) Europäisches Patentamt
European Patent Office
Office européen des brevets

(11) **EP 4 726 834 A1**

(12) **EUROPEAN PATENT APPLICATION**
published in accordance with Art. 153(4) EPC

(43) Date of publication:
**15.04.2026 Bulletin 2026/16**

(21) Application number: **24836318.6**

(22) Date of filing: **03.07.2024**

(51) International Patent Classification (IPC):
**H01M 10/0565** (2010.01)   **H01M 10/0566** (2010.01)
**H01M 10/058** (2010.01)

(52) Cooperative Patent Classification (CPC):
**Y02E 60/10; Y02P 70/50**

(86) International application number:
**PCT/KR2024/009357**

(87) International publication number:
**WO 2025/009870 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.07.2023 KR 20230085866**

(71) Applicant: **SK On Co., Ltd.**
**Seoul 03161 (KR)**

(72) Inventors:
• **RYU, Hye Min**
  **Daejeon 34124 (KR)**
• **KIM, Byung Hyuk**
  **Daejeon 34124 (KR)**
• **PARK, Doe Hee**
  **Daejeon 34124 (KR)**
• **SHIN, Hyun Seop**
  **Daejeon 34124 (KR)**

(74) Representative: **Prüfer & Partner mbB**
**Patentanwälte · Rechtsanwälte**
**Sohnckestraße 12**
**81479 München (DE)**

(54) **ELECTRODE STRUCTURE FOR LITHIUM SECONDARY BATTERY AND MANUFACTURING METHOD THEREFOR**

(57)    According to exemplary embodiments, an electrode structure for a lithium secondary battery includes a first electrode, a second electrode disposed opposite the first electrode, and a plurality of electrolyte layers sequentially formed between the first electrode and the second electrode. Some of the electrolyte layers may have different mechanical strengths or ionic conductivities. As a result, a lithium secondary battery having improved electrochemical stability and output characteristics may be provided.

[FIG. 1]

90

**Description**

[Technical Field]

The present disclosure relates to an electrode structure for a lithium secondary battery and a method for manufacturing the same. More specifically, the present disclosure relates to an electrode structure for a lithium secondary battery including a polymer electrolyte and a method for manufacturing the electrode structure.

[Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

Since commercially available lithium secondary batteries mainly use liquid electrolytes, there are safety issues such as leakage, ignition, and explosion due to sudden environmental changes, including temperature fluctuations, external impacts, and the like. To address these problems, research has been conducted to solidify the electrolyte, thereby enhancing stability and increasing energy density.

An all-solid-state battery may include an electrode assembly including a cathode, an anode, and an intermediate electrolyte layer, and may further include a separator between the cathode and the anode. The all-solid-state battery may further include, for example, a pouch-type outer case to accommodate the electrode assembly.

As the application range of all-solid-state batteries continues to expand, longer lifespan, higher capacity, and higher energy density are increasingly required.

However, when the separator is included between the cathode and anode, the volumetric energy density may be reduced or the electronic and ionic conductivity may deteriorate. In addition, when the separator is removed between the cathode and anode, an electrical short circuit may occur between the cathode and anode.

[Summary of Invention]

[Problems to be Solved by Invention]

An object of the present disclosure is to provide an electrode structure for a lithium secondary battery having improved energy density and stability.

Another object of the present disclosure is to provide a method for manufacturing an electrode structure for a lithium secondary battery having improved energy density and stability.

[Means for Solving Problems]

An electrode structure for a secondary battery according to exemplary embodiments of the present disclosure may include: a first electrode; a first electrolyte layer formed on the first electrode; a second electrode disposed on the first electrolyte layer; a second electrolyte layer formed on a surface of the second electrode disposed opposite the first electrolyte layer; and a third electrolyte layer formed between the first electrolyte layer and the second electrolyte layer.

In some embodiments, the third electrolyte layer may have a greater peel strength than the first electrolyte layer and the second electrolyte layer.

The peel strength may be a value measured by cutting the electrolyte layer to a cutting depth of 2 $\mu$m using a cutting blade, and then peeling the electrolyte layer at a horizontal cutting speed of 2 $\mu$m/sec and a vertical cutting speed of 0.2 $\mu$m/sec.

In some embodiments, the ionic conductivity of each of the first electrolyte layer and the second electrolyte layer may be greater than the ionic conductivity of the third electrolyte layer.

In some embodiments, each of the first electrolyte layer, the second electrolyte layer, and the third electrolyte layer may include a curable polymer and a liquid electrolyte.

In some embodiments, the content of the curable polymer in the first electrolyte layer and the content of the curable polymer in the second electrolyte layer may be less than the content of the curable polymer in the third electrolyte layer.

In some embodiments, the content of the curable polymer in the first electrolyte layer may be greater than 0% by weight and not more than 20% by weight, based on the total weight of the first electrolyte layer, and the content of the curable polymer in the second electrolyte layer may be greater than 0% by weight and not more than 20% by weight, based on the total weight of the second electrolyte layer.

In some embodiments, the content of the curable polymer in the third electrolyte layer may be 10% by weight to 50% by weight, based on the total weight of the third electrolyte layer.

In some embodiments, each of the first electrode and the second electrode may include an electrode current collector and an electrode active material layer formed on the electrode current collector, and the electrode active material layer may include the curable polymer and the liquid electrolyte.

In some embodiments, the thickness of the third electrolyte layer may be greater than the thickness of the first electrolyte layer and the thickness of the second electrolyte layer.

In some embodiments, the peel strengths of the first electrolyte layer and the second electrolyte layer may each be 0.01 kN/m to 0.1 kN/m.

In some embodiments, the peel strength of the third electrolyte layer may be 0.1 kN/m or more.

In some embodiments, the electrode structure for a lithium secondary battery may further include a fourth electrolyte layer formed between the second electrolyte layer and the third electrolyte layer.

In some embodiments, the fourth electrolyte layer may have a greater peel strength than the first electrolyte layer and the second electrolyte layer.

In a method for manufacturing an electrode structure for a secondary battery according to exemplary embodiments of the present disclosure, a first electrolyte layer may be formed by curing a first electrolyte composition applied onto a first electrode. A second electrolyte layer may be formed by curing a second electrolyte composition applied onto a second electrode. A third electrolyte composition may be applied onto a first electrolyte layer to form a third electrolyte layer. The first electrode and the second electrode may be bonded such that the second electrolyte layer and the third electrolyte layer face each other.

In some embodiments, each of the first electrolyte composition, the second electrolyte composition, and the third electrolyte composition may include a polymerizable compound and an initiator.

In some embodiments, the polymerizable compound may be a photopolymerizable compound, and each of the first electrolyte layer, the second electrolyte layer, and the third electrolyte layer may be formed by irradiating the first electrolyte composition, the second electrolyte composition, and the third electrolyte composition with light.

In some embodiments, the content of the polymerizable compound in the third electrolyte composition may be greater than the content of the polymerizable compound in the first electrolyte composition and the content of the polymerizable compound in the second electrolyte composition.

In some embodiments, each of the first electrolyte composition, the second electrolyte composition, and the third electrolyte composition may further include a lithium salt and an organic solvent.

In some embodiments, a fourth electrolyte layer may be formed by applying a fourth electrolyte composition onto the second electrolyte layer and curing the fourth electrolyte composition, and bonding the first electrode and the second electrode such that the third electrolyte layer and the fourth electrolyte layer face each other.

In some embodiments, the fourth electrolyte composition may include a polymerizable compound and an initiator, and the content of the polymerizable compound in the fourth electrolyte composition may be greater than the content of the polymerizable compound in the first electrolyte composition and the content of the polymerizable compound in the second electrolyte composition.

In some embodiments, a portion of the first electrolyte composition applied onto the first electrode may be impregnated into the first electrode, and a portion of the second electrolyte composition applied onto the second electrode may be impregnated into the second electrode.

[Advantageous effects]

The electrode structure for a secondary battery according to the present disclosure may be stably supported and may prevent an electrical short circuit between the electrodes, thereby improving the cycle life characteristics of the secondary battery.

In addition, the electrode structure for a secondary battery according to the present disclosure may further reduce the internal resistance of the secondary battery and may further improve capacity and cycle life characteristics.

Further, the electrode structure for a secondary battery according to the present disclosure may further improve the lithium ion conductivity and energy density inside the electrode.

[Brief Description of Drawings]

FIG. 1 is a schematic cross-sectional view illustrating an electrode structure for a secondary battery according to exemplary embodiments of the present disclosure.

FIG. 2 is a schematic cross-sectional view illustrating an electrode structure for a secondary battery according to exemplary embodiments of the present disclosure.

FIG. 3 is a schematic process flowchart describing a method for manufacturing an electrode structure according to exemplary embodiments of the present disclosure.

FIGS. 4 and 5 are schematic cross-sectional views, respectively, illustrating a portion of an electrode structure according to an embodiment of the present disclosure.

FIG. 6 is a scanning electron microscope (SEM) image of a cross-section of the first electrode and the first electrolyte layer of the electrode structure according to Example 1.

FIG. 7 is an SEM image of a cross-section of the first electrolyte layer and the second electrolyte layer of the electrode structure according to Example 1.

FIG. 8 is a graph showing the capacity retention according to the number of cycles for the secondary batteries according to the examples and comparative examples.

[Mode for Carrying out Invention]

According to embodiments of the present disclosure, an electrode structure is provided, including opposing electrodes and an electrolyte layer formed between the electrodes.

In addition, according to embodiments of the present disclosure, a method for manufacturing the above-described electrode structure is provided.

Hereinafter, the embodiments of the present disclosure will be described in more detail with reference to the accompanying drawings. However, the drawings attached to the present disclosure are merely illustrative of some embodiments of the present disclosure to aid in understanding the technical spirit of the invention together with the foregoing description. Therefore, the present disclosure should not be construed as being limited to the matters illustrated in the drawings.

The terms "upper portion," "lower portion," "upper surface," "lower surface," "bottom surface," "first," "second," "third," and "fourth," etc. as used herein indicate relative positions of respective components and do not imply absolute positional relationships.

<Electrode Structure for **Lithium** Secondary Battery>

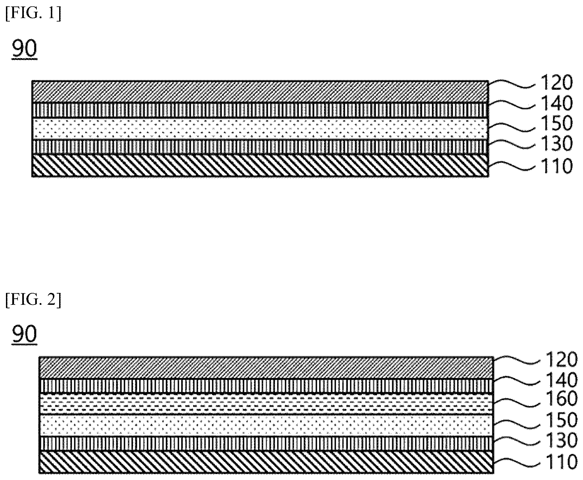

FIG. 1 is a schematic cross-sectional view illustrating an electrode structure for a lithium secondary battery according to exemplary embodiments of the present disclosure.

Referring to FIG. 1, an electrode structure 90 for a lithium secondary battery (hereinafter, also abbreviated as the "electrode structure") may include a first electrode 110 and a second electrode 120 disposed opposite the first electrode 110.

The first electrode 110 and the second electrode 120 may include an electrode active material capable of intercalating and deintercalating lithium ions.

For example, the first electrode 110 and the second electrode 120 may each include an electrode current collector and an electrode active material layer formed on at least one surface of the electrode current collector. The electrode active material layer may include the electrode active material, and may further include a conductive material, a binder, or a solid electrolyte.

In one embodiment, the first electrode 110 or the second electrode 120 may be a lithium electrode formed of lithium metal or a lithium alloy. For example, the lithium secondary battery may be provided as a lithium metal battery.

According to exemplary embodiments, a plurality of electrolyte layers may be disposed between the first electrode 110 and the second electrode 120. Each electrolyte layer may be a polymer electrolyte layer including a polymer and an electrolyte.

As the polymer electrolyte layer mediates the migration of ions and electrons between the first electrode 110 and the second electrode 120, the ionic conductivity of the electrode structure 90 may be increased even if the electrode structure is not impregnated with a liquid electrolyte. Accordingly, the output and capacity characteristics of the secondary battery may be improved.

In addition, leakage, ignition, and vaporization due to the liquid electrolyte may be prevented, while the flame retardancy, heat resistance, and structural stability of the electrode structure 90 may be improved.

A first electrolyte layer 130 may be formed on the first electrode 110. For example, the first electrolyte layer 130 may cover a surface of the first electrode 110, and may be in direct contact with the first electrode 110.

A second electrolyte layer 140 may be formed on the second electrode 120. For example, the second electrolyte layer 140 may cover a surface of the second electrode 120 and may be in direct contact with the second electrode 120.

A third electrolyte layer 150 may be disposed between the first electrolyte layer 130 and the second electrolyte layer 140. For example, the third electrolyte layer 150 may be formed on the first electrolyte layer 130, and the first electrode and the second electrode may be bonded such that the second electrolyte layer 140 and the third electrolyte layer 150 face each other.

According to exemplary embodiments, each electrolyte layer may be formed through a photopolymerization reaction or a thermal polymerization reaction. For example, each electrolyte layer may include a curable polymer formed by the polymerization of a polymerizable compound. The polymerizable compound contains a photoreactive functional group or a thermally reactive functional group, and may form a crosslinking network by irradiation with light or exposure to heat

The curable polymer may serve as a support or a framework for each electrolyte layer. In addition, lithium ions may migrate between the lattices of the crosslinked network formed by the curable polymer, thereby supplementing or improving the ionic conductivity within the electrolyte layer.

In one embodiment, each of the electrolyte layers 130, 140 and 150 may be formed through a photopolymerization reaction. For example, each of the electrolyte layers 130, 140 and 150 may include a photocurable polymer. Accordingly, the adhesion between the electrodes 110 and 120 and the electrolyte layers 130, 140 and 150, or between the electrolyte layers 130, 140 and 150, may be further improved, and damage to the electrode structure 90 caused by high-temperature heat treatment may be further suppressed.

In exemplary embodiments, the electrode structure 90 may not include a separator. The curable polymer may support the electrode structure and block contact between the first electrode 110 and the second electrode 120, thereby preventing an electrical short circuit between the first electrode 110 and the second electrode 120 even without a separator.

For example, if the electrode structure 90 includes a separator, the separator may form a dead volume region, which may lower the energy density of the electrode structure 90 and reduce ionic conductivity. In one embodiment, the electrode structure 90 may not include a separator, thereby further improving the capacity and output characteristics of the lithium secondary battery.

According to exemplary embodiments, the third electrolyte layer 150 may have mechanical properties greater than those of the first electrolyte layer 130 and the second electrolyte layer 140.

The third electrolyte layer 150, interposed as an intermediate layer, has relatively high mechanical strength, which may improve the mechanical properties and stability of the electrode structure 90. For example, the third electrolyte layer 130 may mitigate external impacts and prevent internal breakage and cracks of the electrode structure 90. Therefore, the cycle life characteristics of the secondary battery may be improved.

For example, the third electrolyte layer 150 may have a peel strength greater than that of the first electrolyte layer 130 and the second electrolyte layer 140.

In some embodiments, the peel strength of each of the first electrolyte layer 130 and the second electrolyte layer 140 may be 0.01 kN/m to 0.1 kN/m.

In some embodiments, the peel strength of the third electrolyte layer 150 may be 0.1 kN/m or more. For example, the peel strength of the third electrolyte layer 150 may be 0.1 kN/m to 1.0 kN/m, 0.1 kN/m to 0.5 kN/m, or 0.1 kN/m to 0.3 kN/m.

For example, the peel strength of each electrolyte layer may be measured using the Surface And Interfacial Cutting Analysis System (SAICAS) evaluation method. For example, an electrolyte layer having a thickness of approximately 10 $\mu$m may be formed on an aluminum foil, and the electrolyte layer may be cut using a cutting blade to a cutting depth of approximately 2 $\mu$m. Thereafter, the peel strength of the electrolyte layer may be measured under conditions of a horizontal cutting speed of 2 $\mu$m/sec and a vertical cutting speed of 0.2 $\mu$m/sec.

According to exemplary embodiments, the ionic conductivity of the first electrolyte layer 130 may be greater than that of the third electrolyte layer 150. In some embodiments, the ionic conductivity of the second electrolyte layer 140 may be greater than that of the third electrolyte layer 150.

Since the electrolyte layers 130 and 140, which are in direct contact with the electrodes 110 and 120, have high ionic conductivity, the bottleneck phenomenon of lithium ions in the region adjacent to the electrodes 110 and 120 may be inhibited, and the output characteristics and fast-charging performance may be further improved.

In one embodiment, the ionic conductivity of each of the first electrolyte layer 130 and the second electrolyte layer 140 may be $10^{-3}$ S/cm to $10^{-2}$ S/cm.

In one embodiment, the ionic conductivity of the second electrolyte layer 140 may be substantially equal to that of the first electrolyte layer 130.

In one embodiment, the ionic conductivity of the third electrolyte layer 150 may be $10^{-5}$ S/cm to $10^{-2}$ S/cm.

In one embodiment, the mechanical strength of the first electrolyte layer 130 may be greater than that of the second electrolyte layer 140. For example, the first electrolyte layer 130 may have a peel strength greater than that of the second electrolyte layer 140.

In one embodiment, the first electrode 110 may be an anode. Since the first electrolyte layer 130 formed directly on the anode has a relatively high mechanical strength, it may more effectively absorb and distribute stress due to expansion of the anode. Accordingly, the structural stability of the electrode structure may be enhanced even during repeated charging and discharging, and cycle life characteristics may be improved.

In one embodiment, the ionic conductivity of the second electrolyte layer 140 may be greater than or equal to that of the first electrolyte layer 130. In this case, the second electrode 120 may be a cathode. Since the electrolyte layer formed on the cathode has high ionic conductivity, the interfacial resistance and internal resistance may be further reduced, and ions may migrate more efficiently. Accordingly, the output characteristics and charge and discharge efficiency of the secondary battery may be further improved.

According to exemplary embodiments, the content of the curable polymer in the first electrolyte layer 130 and the content of the curable polymer in the second electrolyte layer 140 may be less than that of the curable polymer in the third electrolyte layer 150.

By including a relatively greater content of the curable polymer in the third electrolyte layer 150, the mechanical strength or the peel strength of the third electrolyte layer 150 may be increased, and the structural stability of the electrode structure 90 may be further improved.

By including a relatively low content of the curable polymer in the first electrolyte layer 130 and the second electrolyte layer 140, the content of the electrolyte component, for example, a lithium salt, may be relatively increased, and ionic conductivity may be further enhanced. Therefore, the output characteristics and fast-charging performance of the secondary battery may be further improved.

In some embodiments, the content of the curable polymer included in each of the first electrolyte layer 130 and the second electrolyte layer 140 may be greater than 0% by weight ("wt%") and not more than 20 wt%, based on the total weight of each electrolyte layer, for example, greater than 0 wt% and not more than 15 wt%, 5 wt% to 20 wt% or 5 wt% to 10 wt%.

Within the above range, the stability of the electrode structure 90 may be secured while the pathway for lithium ion migration may be further increased, thereby improving ion transfer efficiency and reducing the internal resistance of the electrode structure.

In some embodiments, the content of the curable polymer included in the third electrolyte layer 130 may be 10 wt% to 50 wt%, based on the total weight of the third electrolyte layer 130, for example, 10 wt% to 40 wt%, or 15 wt% to 30 wt%.

Within the above range, the structural stability and electrochemical stability of the electrode structure 90 may be further improved while preventing an increase in resistance and a reduction in ionic conductivity within the electrode structure 90.

In one embodiment, each of the electrolyte layers 130, 140 and 150 may include a lithium salt and an organic solvent. For example, each of the electrolyte layers 130, 140 and 150 may include a liquid electrolyte. The liquid electrolyte layer may be accommodated and present within a network formed by the photocurable polymer.

A lithium salt may secure the pathway for lithium ion migration within the electrolyte layer, and the output characteristics of the secondary battery may be further improved.

The lithium salt may be selected from $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, or a combination thereof.

In some embodiments, the content of the liquid electrolyte in the first electrolyte layer 130 and the content of the liquid electrolyte in the second electrolyte layer 140 may be greater than that of the liquid electrolyte in the third electrolyte layer 150.

In one embodiment, the content of the liquid electrolyte included in each of the first electrolyte layer 130 and the second electrolyte layer 140 may be 80 wt% or more and less than 100 wt%, based on the total weight of each electrolyte layer; for example, from 80 wt% to 95 wt%, or from 90 wt% to 95 wt%. Within this range, the resistance and ionic conductivity of the electrolyte layer may be further improved without a reduction in thermal and chemical stability.

In some embodiments, the content of the liquid electrolyte included in the third electrolyte layer 150 may be 50 wt% to 90 wt%, based on the total weight of the third electrolyte layer 150, for example, 60 wt% to 90 wt%, or 70 wt% to 85 wt%.

In some embodiments, the thickness of the third electrolyte layer 150 may be greater than that of each of the first electrolyte layer 130 and the second electrolyte layer 140.

As the thickness of the third electrolyte layer 150 is relatively large, it may have greater mechanical strength. For example, as the elasticity, physical strength, and crack resistance of the third electrolyte layer 150, which serves as a support layer between the first electrode 110 and the second electrode 120 increase, external impacts may be effectively mitigated.

In addition, since the thicknesses of the electrolyte layers 130 and 140 in direct contact with the electrodes 110 and 120 are relatively thin, ionic conductivity may be further improved, and the initial efficiency and fast-charging performance of the secondary battery may be further enhanced.

In one embodiment, each of the first electrolyte layer 130 and the second electrolyte layer 140 may have a thickness of 1 μm to 40 μm, for example, 5 μm to 30 μm, or 5 μm to 15 μm. Within this range, ionic conductivity may be improved while preventing in resistance and electrical short circuit, and the output characteristics of the secondary battery may be further improved.

In one embodiment, the thickness of the third electrolyte layer 150 may be 10 μm to 100 μm, for example, 20 μm to 80 μm, or 20 μm to 40 μm. Within this range, the structural stability of the electrode structure may be further improved while preventing in resistance and a reduction in energy density due to the third electrolyte layer 150.

In some embodiments, the first electrode 110 and/or the second electrode 120 may include the curable polymer and a lithium salt. For example, at least a portion of the polymer electrolyte included in each of the first electrolyte layer 130 and the second electrolyte layer 140 may be impregnated into the first electrode 110 and the second electrode 120.

Therefore, the interfacial resistance between the electrodes 110 and 120 and the first electrolyte layer 130 may be further reduced. In addition, since the electrodes 110 and 120 include a polymer electrolyte, the ionic conductivity and energy density within the electrodes 110 and 120 may be further increased.

FIG. 2 is a schematic cross-sectional view illustrating an electrode structure 90 for a secondary battery according to exemplary embodiments of the present disclosure.

Referring to FIG. 2, a fourth electrolyte layer 160 may be further formed between the second electrolyte layer 140 and the third electrolyte layer 150.

The fourth electrolyte layer 160 may serve as a buffer layer between the second electrolyte layer 140 and the third electrolyte layer 150. For example, direct bonding between the second electrolyte layer 140 and the third electrolyte layer 150 may cause cracks and damage to the second electrolyte layer 140, which has a relatively low peel strength. The fourth electrolyte layer 160 may mitigate stress and impacts applied to the second electrolyte layer 140.

According to exemplary embodiments of the present disclosure, the mechanical strength (e.g., peel strength) of the fourth electrolyte layer 160 may be greater than that of the first electrolyte layer 130 and that of the second electrolyte layer 140. As the fourth electrolyte layer 160, which has relatively high mechanical strength, is interposed between the second electrolyte layer 140 and the third electrolyte layer 150, the structural stability of the electrode structure 90 may be further improved, and the second electrolyte layer 150 may be protected, thereby maintaining high ionic conductivity and energy density.

In one embodiment, the peel strength of the fourth electrolyte layer 160 may be 0.1 kN/m or more, for example, 0.1 kN/m to 1.0 kN/m, 0.1 kN/m to 0.5 kN/m, or 0.1 kN/m to 0.3 kN/m.

In some embodiments, the fourth electrolyte layer 160 may include a curable polymer and may further include a liquid electrolyte, such as a lithium salt and an organic solvent.

According to exemplary embodiments of the present disclosure, the content of the curable polymer in the fourth electrolyte layer 160 may be greater than that of the curable polymer in the first electrolyte layer 130 and that of the curable polymer in the second electrolyte layer 140.

By including a relatively greater amount of a curable polymer in the fourth electrolyte layer 160, the mechanical strength may be further enhanced, and the stability of the electrode structure 90 against external impacts may be further improved.

In some embodiments, the content of the curable polymer included in the fourth electrolyte layer 160 may be 10 wt% to 50 wt%, based on the total weight of the fourth electrolyte layer 160, for example, 10 wt% to 40 wt%, or 15 wt% to 30 wt%.

In some embodiments, the content of the liquid electrolyte included in the fourth electrolyte layer 160 may be 50 wt% to 90 wt%, based on the total weight of the fourth electrolyte layer 160, for example, 60 wt% to 90 wt%, or 70 wt% to 85 wt%.

Within the above range, the structural stability and electrochemical stability of the electrode structure may be further improved while preventing an increase in resistance and a reduction in ionic conductivity.

In some embodiments, the content of the liquid electrolyte in the fourth electrolyte layer 160 may be less than that of the liquid electrolyte in the first electrolyte layer 130 and that of the liquid electrolyte in the second electrolyte layer 140.

In some embodiments, the thickness of the fourth electrolyte layer 160 may be greater than that of each of the first electrolyte layer 130 and the second electrolyte layer 140. As the thickness of the fourth electrolyte layer 160 is relatively large, it may have greater mechanical strength or peel strength.

In some embodiments, each electrolyte layer may further include an oxide-based solid electrolyte.

The oxide-based solid electrolyte has high ionic conductivity, which may improve the conductivity of the electrolyte layers 130, 140, 150 and 160. For example, the ionic conductivity of a polymer electrolyte may be supplemented by the oxide-based solid electrolyte, thereby further improving the output characteristics and capacity characteristics of a secondary battery.

In some embodiments, the oxide-based solid electrolyte may be an ion conductive metal compound containing oxygen. For example, examples of the oxide-based solid electrolyte include LLTO-based compounds, $Li_6La_2CaTa_2O_{12}$, $Li_6La_2ANb_2O_{12}$ (wherein A is Ca or Sr), $Li_2Nd_3TeSbO_{12}$, $Li_3BO_{2.5}N_{0.5}$, $Li_9SiAlO_8$, LAGP-based compounds, LATP-based

compounds, $Li_{1+x}Ti_{2-x}Al_xSi_y(PO_4)_{3-y}$ (0≤x≤1, 0≤y≤1), $LiAl_xZr_{2-x}(PO_4)_3$ (0≤x≤1, 0≤y≤1), $LiTi_xZr_{2-x}(PO_4)_3$ (0≤x≤1, 0≤y≤1), LLZO-based compounds including $Li_xLa_yZr_zO_{12}$, $Li_xGa_aLa_yZr_zO_{12}$ and/or $Li_xLa_yZr_zTa_cO_{12}$ (wherein 5≤x≤9, 0≤a≤4, 0≤b≤4, 2≤y≤4, 1≤z≤3, and 0≤c≤4); LISICON-based compounds, LIPON-based compounds, perovskite-based compounds, NASICON-based compounds, and garnet-based compounds.

In some embodiments, the content of the oxide-based solid electrolyte may be 1 wt% or more, 5 wt% or more, or 10 wt% or more, and 30 wt% or less, 20 wt% or less, or 15 wt% or less, based on the total weight of the respective electrolyte layers 130, 140, 150 and 160. Within this range, the high-rate characteristics and output characteristics of the electrode structure 90 may be further improved while preventing a reduction in the mechanical properties and thermal and chemical stability of each electrolyte layer.

In some embodiments, each electrolyte layer may further include a sulfide-based solid electrolyte.

For example, the sulfide-based solid electrolyte may be an LPS-based solid electrolyte including Li, P, and S, an LGPS-based solid electrolyte including Li, P, Ge, and S, or an LSiPSCl-based solid electrolyte including Li, Si, P, S, and Cl.

For example, as the above sulfide-based solid electrolyte, $Li_2S\text{-}P_2S_5$, $Li_{10}GeP_2S_{12}$, $Li_{10}SnP_2S_{12}$, $Li_{9.54}Si_{1.74}P_{1.44}S_{11.7}Cl_{0.3}$, $Li_{10}(Si_{0.5}Ge_{0.5})P_2S_{12}$, $Li_{10}(Ge_{0.5}Sn_{0.5})P_2S_{12}$, $Li_{10}(Si_{0.5}Sn_{0.5})P_2S_{12}$, $Li_{10}GeP_2S_{11.7}O_{0.3}$, $Li_{9.6}P_3S_{12}$, $Li_9P_3S_9O_3$, $Li_{10.35}Ge_{1.35}P_{1.65}S_{12}$, $Li_{10.35}Si_{1.35}P_{1.65}S_{12}$, $Li_{9.81}Sn_{0.81}P_{2.19}S_{12}$, $Li_{9.42}Si_{1.02}P_{2.1}S_{9.96}O_{2.04}$, and $Li_6PS_5Cl$ may be used.

In some embodiments, the content of the sulfide-based solid electrolyte may be 20 wt% or less, 15 wt% or less, or 10 wt% or less, and may be 1 wt% or more, 3 wt% or more, or 5 wt% or more, based on the total weight of the respective electrolyte layers 130, 140, 150 and 160.

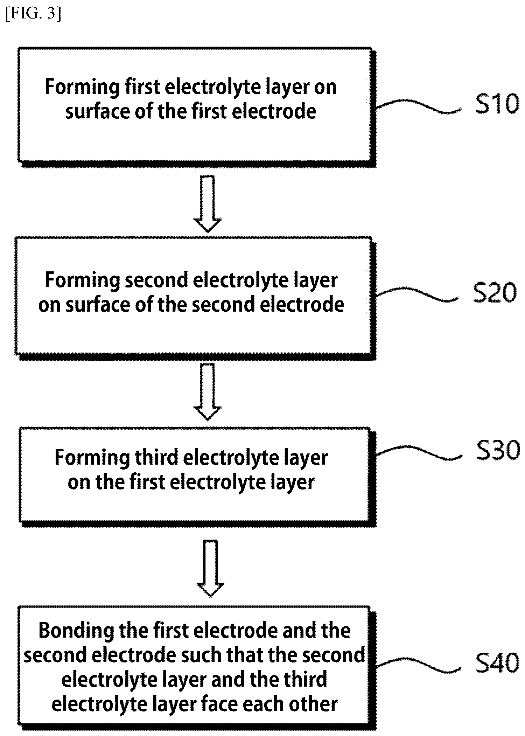

FIG. 3 is a schematic process flowchart describing a method for manufacturing an electrode structure according to exemplary embodiments of the present disclosure. Hereinafter, the method for manufacturing an electrode structure will be described with reference to FIG. 3.

Referring to FIG. 3, a first electrolyte composition may be applied onto the first electrode 110, and the first electrolyte composition may be polymerized to form the first electrolyte layer 130 (e.g., step S10).

In addition, a second electrolyte composition may be applied onto the second electrode 120, and the electrolyte composition may be polymerized to form a second electrolyte layer 140 (e.g., step S20).

Thereafter, a third electrolyte composition may be applied onto the first electrolyte layer 130, and the third electrolyte composition may be polymerized to form a third electrolyte layer 150 (e.g., step S30).

Since each electrolyte layer is formed directly on the surface of the underlying layer, the interfacial resistance between the layers may decrease. For example, if the first electrode 110 and the first electrolyte layer 130 are physically or thermally compressed, the adhesion at the interface may decrease, and cracks or breakage may occur due to external force.

Examples of coating methods for each electrolyte composition may include, for example, gravure coating, die coating, multi-die coating, dip coating, and comma coating.

According to an embodiment of the present disclosure, each electrolyte layer may be formed through a photopolymerization reaction or a thermal polymerization reaction. For example, the electrolyte composition may include a polymerizable compound and an initiator, and a crosslinking reaction may occur upon light irradiation or heat exposure.

In some embodiments, each electrolyte composition may include a photopolymerizable compound and a photoinitiator, or a thermally polymerizable compound and a thermal initiator. The photopolymerizable compound may be a compound containing a photoreactive functional group and capable of polymerizing upon light irradiation. The thermally polymerizable compound may be a compound containing a thermally reactive functional group and capable of polymerizing upon exposure to heat.

For example, the polymerizable compound may include ethoxylated trimethylolpropane triacrylate, di(trimethylolpropane) tetraacrylate, diethylene glycol di(meth)acrylate, ethylene glycol di(meth)acrylate, dipropylene glycol di(meth)acrylate, ethylene glycol divinyl ether, diethylene glycol divinyl ether, triethylene glycol di(meth)acrylate, dipentaerythritol pentaacrylate, trimethylolpropane tri(meth)acrylate, propoxylated trimethylolpropane triacrylate, propoxylated trimethylolpropane triacrylate, polyethylene glycol diacrylate (PEGDA), polyethylene glycol dimethacrylate (PEGMA), or a combination thereof.

The photoinitiator may include acyl phosphines such as 2-hydroxy-2-methyl-1-phenylpropan-1-one (HMPP), benzoin ether, dialkyl acetophenone, hydroxyl alkylketone, phenyl glyoxylate, benzyl dimethyl ketal, 2,4,6-trimethyl-benzoyl-trimethyl phosphine oxide, and α-aminoketones.

The thermal initiator may include an azo compound such as 2,2-azobis(2-cyanobutane), 2,2-azobis(methylbutyronitrile), 2,2'-azoisobutyronitrile (AIBN), or azobisdimethyl-valeronitrile (AMVN), or a peroxide compound such as benzoyl peroxide, acetyl peroxide, dilauryl peroxide, di-tert-butyl peroxide, cumyl peroxide, or hydrogen peroxide.

In some embodiments, the content of the polymerizable compound included in each of the first electrolyte composition and the second electrolyte composition may be greater than 0 wt% and not more than 20 wt%, based on the total weight of the respective electrolyte compositions, for example, greater than 0 wt% and not more than 15 wt%, 5 wt% to 20 wt% or 5 wt% to 10 wt%.

In some embodiments, the content of the polymerizable compound included in the third electrolyte composition may be 10 wt% to 50 wt%, based on the total weight of the third electrolyte composition, for example, 10 wt% to 40 wt%, or 15 wt% to 30 wt%.

In some embodiments, the content of the initiator in each electrolyte composition may be 0.5 wt% to 2 wt%, based on 100 parts by weight the polymerizable compound included in each electrolyte composition.

In one embodiment, the electrolyte layers may be formed by irradiating the electrolyte composition with light. Since each electrolyte layer is formed through a photopolymerization reaction, the polymerization reaction may be performed at a relatively low temperature. Therefore, damage to the electrode structure 90 caused by high-temperature heat treatment may be prevented.

In some embodiments, the UV photocuring process for the photopolymerization may be performed using light having a wavelength of 250 nm to 400 nm and an intensity of 800 mW/cm$^2$ to 1100 mW/cm$^2$. In one embodiment, the UV photocuring process may be performed for 5 to 20 seconds.

In some embodiments, each of the electrolyte compositions may include a lithium salt and an organic solvent. For example, the first electrolyte composition and the second electrolyte composition may include a liquid electrolyte.

The solvent may sufficiently dissolve each component included in the electrolyte composition while adjusting the viscosity of the electrolyte composition to an appropriate level.

The solvent may be selected from ethylene carbonate (EC), propylene carbonate (PC), dimethyl carbonate (DMC), diethyl carbonate (DEC), ethyl methyl carbonate (EMC), methylpropyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, tetrahydrofuran, or a combination thereof.

In one embodiment, the content of the liquid electrolyte included in each of the first and second electrolyte compositions may be 80 wt% or more and less than 100 wt%, based on the total weight of each electrolyte layer; for example, 80 wt% to 95 wt%, or 90 wt% to 95 wt%.

In some embodiments, the content of the liquid electrolyte included in the third electrolyte composition may be 50 wt% to 90 wt%, based on the total weight of the third electrolyte composition, for example, 60 wt% to 90 wt%, or 70 wt% to 85 wt%.

In some embodiments, each of the electrolyte compositions may further include an oxide-based solid electrolyte.

In some embodiments, the content of the oxide-based solid electrolyte included in each of the electrolyte compositions may be 30 wt% or less, based on the total weight of the respective electrolyte compositions.

For example, oxide-based solid electrolytes have high light reflectivity, so a greater content of the oxide-based solid electrolyte may increase the light reflectance of the electrolyte composition. When the content of the oxide-based solid electrolyte exceeds 30 wt%, the photopolymerizable compound or photoinitiator may not absorb sufficient light energy, thereby reducing polymerization reactivity and crosslinking density.

In one embodiment, the content of the oxide-based solid electrolyte in each electrolyte composition may be greater than 0 wt% and not more than 30 wt%, greater than 0 wt% and not more than 20 wt%, or greater than 0 wt% and not more than 10 wt%, based on the total weight of the respective electrolyte compositions.

Within the above ranges, greater ionic conductivity and energy density may be provided while preventing a reduction in the crosslinking density and mechanical properties of the electrolyte layer.

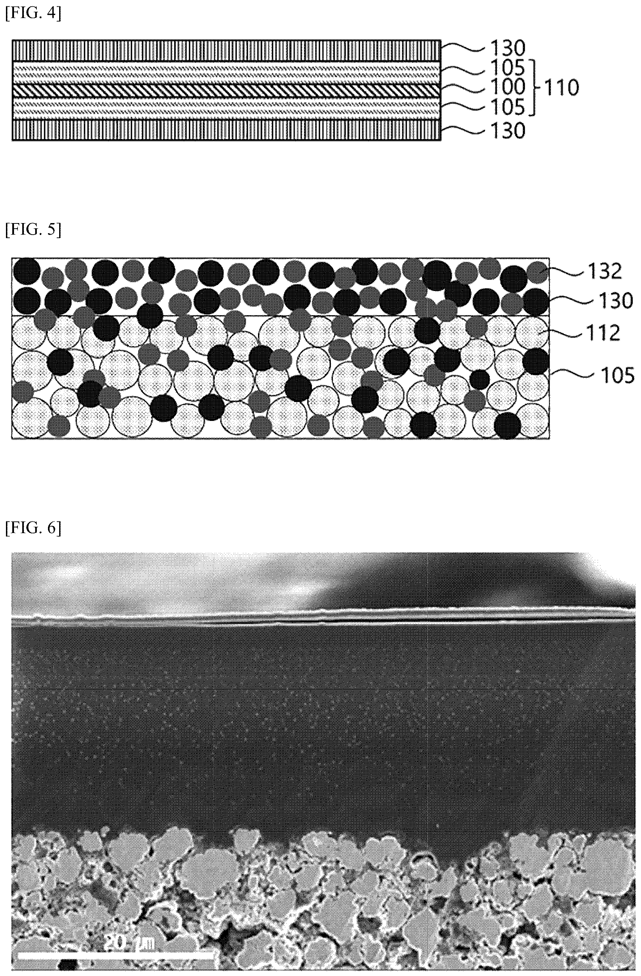

FIGS. 4 and 5 are schematic cross-sectional views, respectively, illustrating a portion of an electrode structure according to exemplary embodiments of the present disclosure.

Referring to FIGS. 4 and 5, a first electrode 110 may include an electrode current collector 100 and an electrode active material layer 105 formed on the electrode current collector 100. The electrode active material layer 105 may also be formed on both surfaces (e.g., the upper and lower surfaces) of the electrode current collector 100.

The first electrolyte layer 130 may be formed on the electrode active material layer 105. For example, the first electrolyte layer 130 may be formed by applying an electrolyte composition to an upper surface of the electrode active material layer 105 and then polymerizing the applied composition.

In some embodiments, at least a portion of the electrolyte (132) included in the first electrolyte layer (130) may be inserted into or diffused into the first electrode (110). For example, the electrode active material layer 105 may include an electrolyte 132 such as a curable polymer and a lithium salt.

For example, after applying the first electrolyte composition onto the surface of the electrode active material layer 105, a process of impregnating the first electrolyte composition into the electrode active material layer may be further performed. Accordingly, a portion of the first electrolyte composition may diffuse into the electrode active material layer 105 and exist between the electrode active materials 112.

In one embodiment, the impregnation process may be performed under reduced pressure. For example, the first electrode coated with the first electrolyte composition may be subjected to vacuum pressure reduction for 10 to 30 seconds to impregnate the electrolyte into the first electrode.

In this case, by curing the first electrolyte composition, a crosslinking network derived from the polymerizable compound may be formed between the first electrolyte layer 130 and the electrode active material layer 105.

In one embodiment, the first electrode 110 and the first electrolyte layer 130 may be substantially integrated or composited by the crosslinking network. Accordingly, the interfacial resistance between the first electrode 110 and the first electrolyte layer 130 may be further reduced. In addition, an additional pathway for ion migration may be secured within the first electrode 110, thereby further improving ionic conductivity.

For convenience of description, only the first electrode and the first electrolyte layer are shown in FIGS. 4 and 5. However, the description provided with reference to FIGS. 4 and 5 may also be applied to the second electrode and the second electrolyte layer.

In some embodiments, a portion of the electrolyte included in the polymer electrolyte layer 140 may penetrate into or diffuse into the second electrode 120.

According to exemplary embodiments of the present disclosure, the first electrode and the second electrode may be bonded such that the second electrolyte layer and the third electrolyte layer face each other and are brought into contact (e.g., step S40). Accordingly, the above-described electrode structure for a secondary battery may be manufactured.

According to exemplary embodiments of the present disclosure, a fourth electrolyte composition may be applied onto the surface of the second electrolyte layer and light may be irradiated to further form a fourth electrolyte layer. For example, a step of forming the fourth electrolyte layer may be further performed prior to step S40.

The step of forming the fourth electrolyte layer may be substantially the same as or similar to step S30 described above.

When the fourth electrolyte layer is further formed on the second electrolyte layer, the first electrode and the second electrode may be bonded such that the third electrolyte layer and the fourth electrolyte layer face each other and are brought into contact.

In some embodiments, the fourth electrolyte composition may include a polymerizable compound and an initiator, and may further include the above-described liquid electrolyte.

In some embodiments, the content of the polymerizable compound included in the fourth electrolyte composition may be 10 wt% to 50 wt%, based on the total weight of the fourth electrolyte composition, for example, 10 wt% to 40 wt%, or 15 wt% to 30 wt%.

In some embodiments, the content of the liquid electrolyte included in the fourth electrolyte composition may be 50 wt% to 90 wt%, based on the total weight of the fourth electrolyte composition, for example, 60 wt% to 90 wt%, or 70 wt% to 95 wt%.

In some embodiments, the first electrode 110 may be a cathode. For example, the first electrode 110 may include a cathode current collector and a cathode active material layer formed on the cathode current collector. In this case, the second electrode 120 may be an anode or a lithium electrode.

The cathode current collector may include, for example, stainless steel, nickel, aluminum, titanium, copper, or an alloy thereof, and may include, for example, aluminum or an aluminum alloy.

The cathode active material layer may include a cathode active material. Examples of the cathode active material may include one or more compounds selected from a lithium cobalt oxide, a lithium manganese oxide, a lithium nickel oxide, or a lithium composite oxide. For example, the cathode active material may include a layered compound such as a lithium cobalt oxide ($LiCoO_2$) or a lithium nickel oxide ($LiNiO_2$); a lithium manganese oxide such as $LiMnO_3$, $LiMn_2O_3$, and $LiMnO_2$; a lithium copper oxide ($Li_2CuO_2$); a vanadium oxide such as $LiV_3O_8$, $LiFe_3O_4$, $V_2O_5$, and $Cu_2VO_7$; a lithium iron phosphate oxide, and the like.

In some embodiments, the cathode active material may include a compound represented by Formula 1 below.

$$[Formula\ 1] \qquad Li_aNi_bM_{1-b}O_2$$

In Formula 1, a may satisfy $0.95 \leq a \leq 1.08$, b may satisfy $0.5 \leq b < 1$, and M may be at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Zr.

In one embodiment, the cathode active material includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The greater the content of nickel, the greater the improvement in capacity and output of the lithium secondary battery. However, if the content of nickel increases excessively, the cycle life of the lithium secondary battery may be reduced, and it may be disadvantageous in terms of mechanical and electrical stability.

In one embodiment, the conductivity or resistance of the lithium secondary battery may be improved by cobalt (Co), as well as the mechanical and electrical stability of the lithium secondary battery may be improved by manganese (Mn).

The chemical structure represented by Formula 1 indicates a bonding relationship among elements included in the lattice structure or the crystal structure of the cathode active material and does not exclude the presence of additional elements. For example, M may serve as a main active element of the cathode active material. Formula 1 is provided to represent the bonding relationship among the main active elements and should be understood as encompassing the introduction or substitution of additional elements.

In one embodiment, the cathode active material may further include auxiliary elements which are added to the main active elements, in order to enhance chemical stability thereof or the crystal structure. The auxiliary element may be incorporated into the crystal structure together to form bonds, and it should be understood that this case is also included within the chemical structure range represented by Formula 1.

According to exemplary embodiments of the present disclosure, the cathode active material layer may further include a conductive material or a binder.

The conductive material may be included to promote electron migration between the cathode active materials. For example, the conductive material may include carbon-based conductive materials such as graphite, carbon black, graphene, or carbon nanotubes and/or metal-based conductive materials such as tin, tin oxide, and titanium oxide; as well as perovskite materials such as $LaSrCoO_3$, and $LaSrMnO_3$, etc.

In some embodiments, the cathode active material layer may further include a binder. For example, the binder may include a vinylidene fluoride-hexafluoropropylene copolymer (PVDF-co-HFP), polyvinylidene fluoride (PVDF), polyacrylonitrile, polymethyl methacrylate, and the like.

For example, the first electrode 110 may be an anode. For example, the first electrode 110 may include an anode current collector and an anode active material layer formed on the anode current collector. In this case, the second electrode 120 may be a cathode or a lithium electrode.

The anode current collector may include gold, stainless steel, nickel, aluminum, titanium, copper, or an alloy thereof, and may include, for example, copper or a copper alloy.

The anode active material layer may include an anode active material. As the anode active material, any active material known in the art may be used, so long as it is capable of absorbing and releasing lithium ions, without particular limitation. For example, carbon-based materials such as crystalline carbon, amorphous carbon, carbon composites, carbon fibers, etc.; a lithium alloy; silicon or tin may be used. Examples of the amorphous carbon may include hard carbon, coke, mesocarbon microbead (MCMB) calcined at 1500°C or lower, mesophase pitch-based carbon fiber (MPCF) or the like. Examples of the crystalline carbon may include graphite-based carbon such as natural graphite, graphitized coke, graphitized MCMB, graphitized MPCF or the like. Other elements contained in the lithium alloy may include, for example, aluminum, zinc, bismuth, cadmium, antimony, silicon, lead, tin, gallium, indium or the like.

Electrode tabs (cathode tabs and anode tabs) may protrude from the cathode current collector and the anode current collector, respectively, and may extend to one side of the case of the secondary battery. The electrode tabs may be welded together with the one side of the case to form electrode leads (a cathode lead and an anode lead) that extend or are exposed to the outside of the case.

The lithium secondary battery according to exemplary embodiments of the present disclosure may include the above-described electrode structure. For example, the lithium secondary battery may be provided as an all-solid-state battery.

According to exemplary embodiments of the present disclosure, an electrode cell may be defined by the above-described electrode structure, and a plurality of electrode cells may be stacked to form an electrode assembly.

In one embodiment, a separator is not interposed between the first electrode 110 and the second electrode 120, allowing the electrode assembly to be formed by stacking a plurality of electrode structures. Therefore, a space for winding and folding the separator is not required, and the internal space efficiency of the electrode assembly may be further improved, thereby increasing the capacity.

Further, since the first electrolyte layer 130 is formed directly on the first electrode 110 and the second electrolyte layer 140 is formed directly on the second electrode 120, internal short circuits resulting from misalignment of the electrode structures may be prevented.

The electrode assembly may be accommodated within the case to define a lithium secondary battery. The lithium secondary battery may be manufactured, for example, in a cylindrical, prismatic, pouch, or coin type using a can.

The electrode structure according to embodiments of the present disclosure may be widely applied in green technology fields, such as electric vehicles, battery charging stations, as well as solar power generation, wind power generation, and the like, which use the batteries. In addition, the electrode structure according to embodiments of the present disclosure may be used in eco-friendly electric vehicles, hybrid vehicles, and the like, which are aimed at mitigating climate change by reducing air pollution and greenhouse gas emissions.

Hereinafter, embodiments of the present invention will be further described with reference to specific experimental examples. However, the examples and comparative examples included in the experimental examples are provided merely for illustrative purposes of the present invention and those skilled in the art will obviously understand that various changes and modifications can be made within the scope and spirit of the present invention. Such changes and modifications are to be regarded as falling within the scope of the appended claims.

**Preparative Example**

(1) **Preparation of** Photocurable **Electrolyte Composition**

1.0 M LiPF$_6$ was dissolved in an organic solvent with a composition of EC/EMC (3:7, v/v), and then 2 parts by weight of FEC was added to 100 parts by weight of the organic solvent to prepare a liquid electrolyte.

The photocurable electrolyte was prepared by mixing poly(ethylene glycol) diacrylate (PEGDA) as a photopolymerizable compound and 2-hydroxy-2-methyl-1-phenyl-propan-1-one (HMPP) as a photoinitiator with the liquid electrolyte. The liquid electrolyte and PEGDA were mixed in the weight ratio shown in Table 1 below to prepare a photocurable electrolyte composition. HMPP was added at 1 part by weight per 100 parts by weight of PEGDA.

[TABLE 1]

|  | Liquid electrolyte : photopolymerizable compound |
|---|---|
|  | (w/w) |
| Composition 1 | 9:1 |
| Composition 2 | 8:2 |
| Composition 3 | 7:3 |
| Composition 4 | 6:4 |
| Composition 5 | 5:5 |

**(2) Fabrication of First Electrode**

A first electrode slurry was prepared by mixing Li[Ni$_{0.6}$Co$_{0.2}$Mn$_{0.2}$]O$_2$ as an active material, carbon black as a conductive material, and polyvinylidene fluoride (PVdF) as a binder in a weight ratio of 95:2.5:2.5. The first electrode slurry was uniformly applied to an aluminum foil having a thickness of 15 $\mu$m, and vacuum-dried at 130°C. The dried slurry was roll-pressed to fabricate a first electrode.

**(3) Fabrication of Second Electrode**

A second electrode slurry was prepared by mixing artificial graphite as an active material, carbon black as a conductive material, and SBR/CMC as a binder in a weight ratio of 96:1:3. The second electrode slurry was applied to a Cu foil having a thickness of 15 $\mu$m, and then dried and roll-pressed to fabricate a second electrode.

**(4) Manufacture of Electrode Structure**

**Example 1**

Electrolyte Composition 1 was applied onto the first electrode, vacuum-decompressed for approximately 20 seconds, and then irradiated with UV light at a wavelength of 365 nm and an intensity of 1000 mW/cm$^2$ for 10 seconds to form a first electrolyte layer (thickness: 10 $\mu$m). Subsequently, Electrolyte Composition 2 was applied onto the first electrolyte layer, and then irradiated with UV light at a wavelength of 365 nm and an intensity of 1000 mW/cm$^2$ for 10 seconds to form a third electrolyte layer (thickness: 30 $\mu$m).

Electrolyte Composition 1 was applied onto the second electrode, vacuum-decompressed for approximately 20 seconds, and then irradiated with UV light at a wavelength of 365 nm and an intensity of 1000 mW/cm$^2$ for 10 seconds to form a second electrolyte layer (thickness: 10 $\mu$m). Thereafter, Electrolyte Composition 2 was applied onto the second electrolyte layer, and then irradiated with UV light at a wavelength of 365 nm and an intensity of 1000 mW/cm$^2$ for 10 seconds to form a fourth electrolyte layer (thickness: 30 $\mu$m).

The first electrode and the second electrode were bonded such that the third electrolyte layer and the fourth electrolyte layer faced each other. The manufactured electrode structure was assembled into a pouch-cell outer case.

**Comparative Example 1**

Electrolyte Composition 2 was applied onto the first electrode, vacuum-decompressed for approximately 20 seconds, and then irradiated with UV light at a wavelength of 365 nm and an intensity of 1000 mW/cm$^2$ for 10 seconds to form a first electrolyte layer (thickness: 30 $\mu$m).

Electrolyte Composition 2 was applied onto the second electrode, vacuum-decompressed for approximately 20 seconds, and then irradiated with UV light at a wavelength of 365 nm and an intensity of 1000 mW/cm$^2$ for 10 seconds to form a second electrolyte layer (thickness: 30 $\mu$m).

The first electrode and the second electrode were bonded such that the first electrolyte layer and the second electrolyte layer faced each other. The manufactured electrode structure was assembled into a pouch-cell outer case.

## Comparative Example 2

Electrolyte Composition 1 was applied onto the first electrode, vacuum-decompressed for approximately 20 seconds, and then irradiated with UV light at a wavelength of 365 nm and an intensity of 1000 mW/cm$^2$ for 10 seconds to form a first electrolyte layer (thickness: 10 $\mu$m).

Electrolyte Composition 2 was applied onto the first electrolyte layer, and then irradiated with UV light at a wavelength of 365 nm and an intensity of 1000 mW/cm$^2$ for 10 seconds to form a second electrolyte layer (thickness: 30 $\mu$m).

Electrolyte Composition 2 was applied onto the second electrolyte layer, and then irradiated with UV light at a wavelength of 365 nm and an intensity of 1000 mW/cm$^2$ for 10 seconds to form a third electrolyte layer (thickness: 30 $\mu$m).

Electrolyte Composition 1 was applied onto the third electrolyte layer, and then irradiated with UV light at a wavelength of 365 nm and an intensity of 1000 mW/cm$^2$ for 10 seconds to form a fourth electrolyte layer (thickness: 30 $\mu$m).

The second electrode was bonded onto the fourth electrolyte layer. The manufactured electrode structure was assembled into a pouch-cell outer case.

## Experimental Example 1: Evaluation of Interface Characteristics

Scanning electron microscope (SEM) images were taken of a cross-section of the electrode structure manufactured in Example 1 using a HITACHI scanning electron microscope.

FIG. 6 is a scanning electron microscope (SEM) image of the cross-section of the first electrode and the first electrolyte layer of the electrode structure according to Example 1.

Referring to FIG. 6, no lifting or delamination was observed between the first electrode and the first electrolyte layer. It can be confirmed that the electrode structure according to Example 1 exhibits high adhesion at the interface between the first electrode and the first electrolyte layer, since the first electrolyte layer is formed directly on the first electrode.

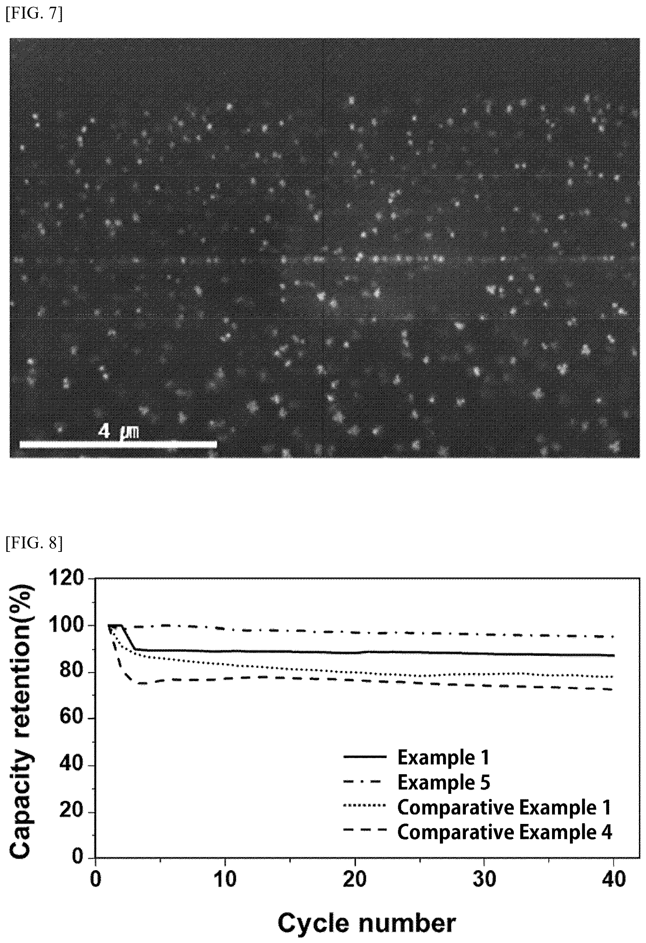

FIG. 7 is an SEM image of a cross-section of the first electrolyte layer and the second electrolyte layer of the electrode structure according to Example 1.

Referring to FIG. 7, the first electrolyte layer and the second electrolyte layer are in close contact with each other, and no lifting or delamination was observed at the interface.

Therefore, the electrode structure according to Example 1 may have lower interfacial resistance due to improved adhesion between the electrolyte layer and the electrodes having relatively high ionic conductivity, and enhanced structural stability due to improved adhesion between the electrolyte layer having relatively high strength and the underlying electrolyte layer.

## Examples 2 to 4

Electrode structures were manufactured in the same manner as in Example 1, except that the respective electrolyte compositions as shown in Table 2 below were used.

## Example 5

Electrolyte Composition 1 was applied onto the first electrode, vacuum-decompressed for approximately 20 seconds, and then irradiated with UV light at a wavelength of 365 nm and an intensity of 1,000 mW/cm$^2$ for 10 seconds to form a first electrolyte layer (thickness: 10 $\mu$m). Subsequently, Electrolyte Composition 2 was applied onto the first electrolyte layer, and then irradiated with UV light at a wavelength of 365 nm and an intensity of 1,000 mW/cm$^2$ for 10 seconds to form a third electrolyte layer (thickness: 30 $\mu$m).

Electrolyte Composition 1 was applied onto the second electrode, vacuum-decompressed for approximately 20 seconds, and then irradiated with UV light at a wavelength of 365 nm and an intensity of 1,000 mW/cm$^2$ for 10 seconds to form a second electrolyte layer (thickness: 10 $\mu$m).

The first electrode and the second electrode were bonded such that the second electrolyte layer and the third electrolyte layer faced each other. The manufactured electrode structure was assembled into a pouch-cell outer case.

#### Comparative Examples 3 to 5

Electrode structures were fabricated in the same manner as in Example 1, except that the respective electrolyte compositions as shown in Table 3 below were used.

#### Comparative Example 6

Electrode structures were fabricated in the same manner as in Example 5, except that the respective electrolyte compositions as shown in Table 4 below were used.

#### Experimental Example 2: Measurement of Peel strength of Electrolyte Layer

The peel strength of each electrolyte layer of the above-described examples 1 to 5 and comparative examples 1, and 3 to 6 was measured using the Surface And Interfacial Cutting Analysis System (SAICAS) evaluation method.

Specifically, each electrolyte composition was applied to an aluminum foil, and a polymerization reaction was performed to form a thin-film electrolyte layer having a thickness of approximately 10 $\mu$m. The peel strength was measured by cutting the electrolyte layer to a cutting depth of 2 $\mu$m using a cutting blade, and then peeling the electrolyte layer at a horizontal cutting speed of 2 $\mu$m/sec and a vertical cutting speed of 0.2 $\mu$m/sec. The measurement results are shown in Tables 2 and 3 below.

#### Experimental Example 3: Measurement of Ionic Conductivity of Electrolyte Layer

Each electrolyte layer of the above-described examples 1 to 5 and comparative examples 1 and 3 to 6 was separated, and the ionic conductivity of each electrolyte layer was measured. Ionic conductivity may be measured using the AC impedance measurement method of the BioLogic Potentiostats device. Ionic conductivity (S/cm) was calculated using Equation 1 below.

$$[\text{Equation 1}]$$

$$\text{Ionic conductivity (S/cm)} = L / (R \times A)$$

R denotes the impedance measurement resistance ($\Omega$), L denotes the thickness of the sample (electrolyte layer) (cm), and A denotes the sample area (cm$^2$).

The measurement results are shown in Tables 2 and 3 below.

[TABLE 2]

| | | Example 1 | Example 2 | Example 3 | Example 4 | Example 5 |
|---|---|---|---|---|---|---|
| First electrolyte layer | Composition | 1 | 1 | 2 | 1 | 1 |
| | Peel strength (kN/m) | 0.01 | 0.01 | 0.1 | 0.01 | 0.01 |
| | Ionic conductivity (S/cm) | 5.0 X 10$^{-3}$ | 5.0 X 10$^{-3}$ | 3.0 X 10$^{-3}$ | 5.0 X 10$^{-3}$ | 5.0 X 10$^{-3}$ |
| Second electrolyte layer | Composition | 1 | 1 | 1 | 1 | 1 |
| | Peel strength (kN/m) | 0.01 | 0.01 | 0.01 | 0.01 | 0.01 |
| | Ionic conductivity (S/cm) | 5.0 X 10$^{-3}$ | 5.0 X 10$^{-3}$ | 5.0 X 10$^{-3}$ | 5.0 X 10$^{-3}$ | 5.0 X 10$^{-3}$ |
| Third electrolyte layer | Composition | 2 | 3 | 3 | 4 | 2 |
| | Peel strength (kN/m) | 0.1 | >0.2 | >0.2 | >0.2 | 0.1 |
| | Ionic conductivity (S/cm) | 3.0 X 10$^{-3}$ | 3.4 X 10$^{-4}$ | 3.4 X 10$^{-4}$ | 2.0 X 10$^{-4}$ | 3.0 X 10$^{-3}$ |
| Fourth electrolyte layer | Composition | 2 | 3 | 3 | 5 | - |
| | Peel strength (kN/m) | 0.1 | >0.2 | >0.2 | >0.2 | - |
| | Ionic conductivity (S/cm) | 3.0 X 10$^{-3}$ | 3.4 X 10$^{-4}$ | 3.4 X 10$^{-4}$ | X 10$^{-5}$ | - |

[TABLE 3]

|  |  | Comparative Example 1 | Comparative Example 3 | Comparative Example 4 | Comparative Example 5 | Comparative Example 6 |
|---|---|---|---|---|---|---|
| First electrolyte layer | Composition | - | 1 | 2 | 3 | 2 |
|  | Peel strength (kN/m) | - | 0.01 | 0.1 | >0.2 | 0.1 |
|  | Ionic conductivity (S/cm) | - | $5.0 \times 10^{-3}$ | $3.0 \times 10^{-3}$ | $3.4 \times 10^{-4}$ | $3.0 \times 10^{-3}$ |
| Second electrolyte layer | Composition | - | 1 | 2 | 1 | 2 |
|  | Peel strength (kN/m) | - | 0.01 | 0.1 | 0.01 | 0.1 |
|  | Ionic conductivity (S/cm) | - | $5.0 \times 10^{-3}$ | $3.0 \times 10^{-3}$ | $5.0 \times 10^{-3}$ | $3.0 \times 10^{-3}$ |
| Third electrolyte layer | Composition | 2 | 1 | 2 | 3 | 1 |
|  | Peel strength (kN/m) | 0.1 | 0.01 | 0.1 | >0.2 | 0.01 |
|  | Ionic conductivity (S/cm) | $3.0 \times 10^{-3}$ | $5.0 \times 10^{-3}$ | $3.0 \times 10^{-3}$ | $3.4 \times 10^{-4}$ | $5.0 \times 10^{-3}$ |
| Fourth electrolyte layer | Composition | 2 | 1 | 2 | 1 | - |
|  | Peel strength (kN/m) | 0.1 | 0.01 | 0.1 | 0.01 | - |
|  | Ionic conductivity (S/cm) | $3.0 \times 10^{-3}$ | $5.0 \times 10^{-3}$ | $3.0 \times 10^{-3}$ | $5.0 \times 10^{-3}$ | - |

## Experimental Example 4: Evaluation of Cycle Life Characteristics

Constant current charge-discharge evaluations were performed on the battery cells manufactured in Examples 1, 5, Comparative Examples 1, 2, and 4. Based on the current density of the first electrode, charging (CC-CV 0.2C, 4.2 V cut-off) and discharging (CC 0.2C, 2.5 V cut-off) were performed at room temperature, and one charge-discharge process was regarded as one cycle.

The cycle life characteristics were evaluated as the percentage obtained by dividing the discharge capacity measured at 10, 20, 30, and 40 cycles by the discharge capacity measured at the first cycle.

In Comparative Example 2, the battery cell failed to operate during charging and discharging, and the corresponding value is indicated as "-" in Table 4 below.

The measurement results are shown in FIG. 8 and Table 4 below.

[TABLE 4]

|  | 10 cycles | 20 cycles | 30 cycles | 40 cycles |
|---|---|---|---|---|
| Example 1 | 89.0 | 88.3 | 88.0 | 87.3 |
| Example 5 | 98.6 | 97.1 | 96.3 | 95.4 |
| Comparative Example 1 | 83.5 | 80.0 | 79.1 | 78.0 |
| Comparative Example 2 | - | - | - | - |
| Comparative Example 4 | 77.4 | 76.7 | 74.5 | 72.6 |

## Experimental Example 5: Evaluation of Initial Efficiency

The manufactured cells were charged (CC-CV 0.2C, 4.2 V cut-off) and discharged (CC 0.2C, 2.5 V cut-off) at room temperature. After the charging and discharging processes were repeated at room temperature under the same conditions, the initial efficiency was evaluated as the percentage obtained by dividing the discharge capacity by the charge capacity.

If the battery cell failed to operate during charging and discharging and the initial efficiency could not be evaluated, the result was indicated as "Unmeasurable."

The measurement results are shown in Table 5 below.

[TABLE 5]

|  | Initial efficiency (%) |
|---|---|
| Example 1 | 97.0 |
| Example 2 | 96.5 |
| Example 3 | 86.1 |
| Example 4 | 88.6 |
| Example 5 | 93.8 |
| Comparative Example 1 | 89.9 |
| Comparative Example 2 | Immeasurable |
| Comparative Example 3 | Immeasurable |
| Comparative Example 4 | 87.2 |
| Comparative Example 5 | Immeasurable |
| Comparative Example 6 | Immeasurable |

Referring to Tables 2 to 5, the lithium secondary battery cells according to the embodiments exhibited high initial efficiency due to high interlayer adhesion within the electrode structure and low interfacial resistance. Furthermore, improved interfacial stability resulted in enhanced cycle life characteristics.

In addition, since the electrolyte layer formed directly on the electrode exhibited high ionic conductivity, and the electrolyte layer formed in the central portion of the electrode structure exhibited high mechanical strength, both the initial efficiency and the cycle life characteristics were improved.

However, in the comparative examples, the overall performance of the secondary battery deteriorated. For example, in Comparative Example 1, an electrolyte layer having high ionic conductivity was not formed on the electrode, resulting in low initial efficiency. Moreover, in Comparative Examples 2 to 6, the cycle life characteristics and the structural stability of the electrode structure were degraded, or the initial efficiency decreased.

## Claims

1. An electrode structure for a secondary battery, comprising:

a first electrode;
a first electrolyte layer formed on the first electrode;
a second electrode disposed on the first electrolyte layer;
a second electrolyte layer formed on a surface of the second electrode disposed opposite the first electrolyte layer; and
a third electrolyte layer formed between the first electrolyte layer and the second electrolyte layer and having a greater peel strength than the first electrolyte layer and the second electrolyte layer,
wherein the peel strength is a value measured by cutting the electrolyte layer to a cutting depth of 2 $\mu$m using a cutting blade, and then peeling the electrolyte layer at a horizontal cutting speed of 2 $\mu$m/sec and a vertical cutting speed of 0.2 $\mu$m/sec.

2. The electrode structure for a lithium secondary battery according to claim 1, wherein the ionic conductivity of each of the first electrolyte layer and the second electrolyte layer is greater than the ionic conductivity of the third electrolyte layer.

3. The electrode structure for a lithium secondary battery according to claim 1, wherein each of the first electrolyte layer, the second electrolyte layer, and the third electrolyte layer comprises a curable polymer and a liquid electrolyte.

4. The electrode structure for a lithium secondary battery according to claim 3, wherein the content of the curable polymer in the first electrolyte layer and the content of the curable polymer in the second electrolyte layer are less than the content of the curable polymer in the third electrolyte layer.

5. The electrode structure for a lithium secondary battery according to claim 4, wherein the content of the curable polymer in the first electrolyte layer is greater than 0% by weight and not more than 20% by weight, based on the total weight of the first electrolyte layer, and
wherein the content of the curable polymer in the second electrolyte layer is greater than 0% by weight and not more than 20% by weight, based on the total weight of the second electrolyte layer.

6. The electrode structure for a lithium secondary battery according to claim 4, wherein the content of the curable polymer in the third electrolyte layer is 10% by weight to 50% by weight, based on the total weight of the third electrolyte layer.

7. The electrode structure for a lithium secondary battery according to claim 3, wherein each of the first electrode and the second electrode comprises an electrode current collector and an electrode active material layer formed on the electrode current collector, and
wherein the electrode active material layer comprises the curable polymer and the liquid electrolyte.

8. The electrode structure for a lithium secondary battery according to claim 1, wherein the thickness of the third electrolyte layer is greater than the thickness of the first electrolyte layer and the thickness of the second electrolyte layer.

9. The electrode structure for a lithium secondary battery according to claim 1, wherein the peel strengths of the first electrolyte layer and the second electrolyte layer are each 0.01 kN/m to 0.1 kN/m.

10. The electrode structure for a lithium secondary battery according to claim 1, wherein the peel strength of the third electrolyte layer is 0.1 kN/m or more.

11. The electrode structure for a lithium secondary battery according to claim 1, further comprising a fourth electrolyte layer formed between the second electrolyte layer and the third electrolyte layer.

12. The electrode structure for a lithium secondary battery according to claim 11, wherein the fourth electrolyte layer has a greater peel strength than the first electrolyte layer and the second electrolyte layer.

13. A method for manufacturing an electrode structure for a secondary battery, comprising:

   forming a first electrolyte layer by curing a first electrolyte composition applied onto a first electrode;
   forming a second electrolyte layer by curing a second electrolyte composition applied onto a second electrode;
   applying a third electrolyte composition onto a first electrolyte layer to form a third electrolyte layer; and
   bonding the first electrode and the second electrode such that the second electrolyte layer and the third electrolyte layer face each other.

14. The method for manufacturing an electrode structure for a lithium secondary battery according to claim 13, wherein each of the first electrolyte composition, the second electrolyte composition, and the third electrolyte composition comprises a polymerizable compound and an initiator.

15. The method for manufacturing an electrode structure for a lithium secondary battery according to claim 14, wherein the polymerizable compound is a photopolymerizable compound, and
wherein each of the first electrolyte layer, the second electrolyte layer, and the third electrolyte layer are formed by irradiating the first electrolyte composition, the second electrolyte composition, and the third electrolyte composition with light.

16. The method for manufacturing an electrode structure for a lithium secondary battery according to claim 14, wherein the content of the polymerizable compound in the third electrolyte composition is greater than the content of the polymerizable compound in the first electrolyte composition and the content of the polymerizable compound in the second electrolyte composition.

17. The method for manufacturing an electrode structure for a lithium secondary battery according to claim 14, wherein each of the first electrolyte composition, the second electrolyte composition, and the third electrolyte composition further comprises a lithium salt and an organic solvent.

18. The method for manufacturing an electrode structure for a lithium secondary battery according to claim 14, further comprising: forming a fourth electrolyte layer by applying a fourth electrolyte composition onto the second electrolyte layer and curing the fourth electrolyte composition; and
bonding the first electrode and the second electrode such that the third electrolyte layer and the fourth electrolyte layer face each other.

19. The method for manufacturing an electrode structure for a lithium secondary battery according to claim 18, wherein the fourth electrolyte composition comprises a polymerizable compound and an initiator, and
wherein the content of the polymerizable compound in the fourth electrolyte composition is greater than the content of the polymerizable compound in the first electrolyte composition and the content of the polymerizable compound in the second electrolyte composition.

20. The method for manufacturing an electrode structure for a lithium secondary battery according to claim 13, wherein a portion of the first electrolyte composition applied onto the first electrode is impregnated into the first electrode, and
wherein a portion of the second electrolyte composition applied onto the second electrode is impregnated into the second electrode.

[FIG. 1]

90

```
120
140
150
130
110
```

[FIG. 2]

90

```
120
140
160
150
130
110
```

[FIG. 3]

Forming first electrolyte layer on
surface of the first electrode — S10

Forming second electrolyte layer
on surface of the second electrode — S20

Forming third electrolyte layer
on the first electrolyte layer — S30

Bonding the first electrode and the
second electrode such that the second
electrolyte layer and the third
electrolyte layer face each other — S40

[FIG. 4]

[FIG. 5]

[FIG. 6]

[FIG. 7]

[FIG. 8]

## INTERNATIONAL SEARCH REPORT

| International application No. |
|---|
| **PCT/KR2024/009357** |

| A. | CLASSIFICATION OF SUBJECT MATTER |
|---|---|
| | **H01M 10/0565**(2010.01)i; **H01M 10/0566**(2010.01)i; **H01M 10/058**(2010.01)i |

According to International Patent Classification (IPC) or to both national classification and IPC

| B. | FIELDS SEARCHED |
|---|---|

Minimum documentation searched (classification system followed by classification symbols)

H01M 10/0565(2010.01); H01M 10/052(2010.01); H01M 10/056(2010.01); H01M 10/0585(2010.01); H01M 10/42(2006.01); H01M 4/38(2006.01); H01M 4/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 구조체 (electrode structure), 박리 강도 (peel strength), 전해질층 (electrolyte layer), 경화형 고분자 (curable resin), 이온 전도도 (ionic conductivity)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2019-0052406 A (LG CHEM, LTD. et al.) 16 May 2019 (2019-05-16) See abstract; paragraph [0059]; and claim 1. | 1-20 |
| A | KR 10-2020-0102613 A (UBATT INC. et al.) 01 September 2020 (2020-09-01) See abstract; paragraphs [0274]-[0279]; and claim 1. | 1-20 |
| A | WO 2022-254284 A1 (SEMICONDUCTOR ENERGY LABORATORY CO., LTD.) 08 December 2022 (2022-12-08) See abstract; claims 1-11; and figure 4A. | 1-20 |
| A | KR 10-2017-0072561 A (RESEARCH INSTITUTE OF INDUSTRIAL SCIENCE & TECHNOLOGY) 27 June 2017 (2017-06-27) See abstract; and claim 1. | 1-20 |
| A | KR 10-2022-0125981 A (DONGWOO FINE-CHEM CO., LTD.) 15 September 2022 (2022-09-15) See abstract; and claims 1-10. | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 October 2024** | **27 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/009357**

| Patent document cited in search report | | | Publication date (day/month/year) | Patent family member(s) | | | Publication date (day/month/year) |
|---|---|---|---|---|---|---|---|
| KR | 10-2019-0052406 | A | 16 May 2019 | CN | 111052478 | A | 21 April 2020 |
| | | | | CN | 111052478 | B | 26 September 2023 |
| | | | | EP | 3654434 | A1 | 20 May 2020 |
| | | | | EP | 3654434 | B1 | 10 April 2024 |
| | | | | JP | 2020-532086 | A | 05 November 2020 |
| | | | | JP | 6972350 | B2 | 24 November 2021 |
| | | | | KR | 10-2268180 | B1 | 22 June 2021 |
| | | | | PL | 3654434 | T3 | 24 June 2024 |
| | | | | US | 2020-0203758 | A1 | 25 June 2020 |
| | | | | WO | 2019-093709 | A1 | 16 May 2019 |
| KR | 10-2020-0102613 | A | 01 September 2020 | WO | 2020-171483 | A1 | 27 August 2020 |
| WO | 2022-254284 | A1 | 08 December 2022 | CN | 117355971 | A | 05 January 2024 |
| | | | | KR | 10-2024-0016321 | A | 06 February 2024 |
| | | | | US | 2024-0266594 | A1 | 08 August 2024 |
| | | | | WO | 2022-254284 | A1 | 08 December 2022 |
| KR | 10-2017-0072561 | A | 27 June 2017 | KR | 10-1829761 | B1 | 19 February 2018 |
| KR | 10-2022-0125981 | A | 15 September 2022 | | None | | |

Form PCT/ISA/210 (patent family annex) (July 2022)